# EUROPÄISCHE PATENTANMELDUNG

(11) **EP 0 659 618 A1**
(43) Veröffentlichungstag der Anmeldung: **28.06.1995**
(21) Anmeldenummer: 94630075.3
(22) Anmeldetag: 22.12.1994
(51) Int. Cl.: B60R 25/00

(54) **Verfahren und Vorrichtung zum Sichern eines Kraftfahrzeuges gegen Diebstahl**

(30) Priorität: 24.12.1993 LU 88447
(71) Anmelder: Castermans, Nico, L-7462 Moesdorf/Mersch (LU)
(72) Erfinder: Castermans, Nico, L-7462 Moesdorf/Mersch (LU)
(74) Vertreter: Weydert, Robert

(57) **Zusammenfassung**

Zur Diebstahlsicherung eines Kraftfahrzeuges wird eine Blockierstange (28) von der Fahrzeugaußenseite her in den Schwenkweg eines Fußpedals (2, 4, 6) eingesteckt und verriegelt.

## Beschreibung

Die Erfindung betrifft ein Verfahren und eine Vorrichtung zum Sichern eines Kraftfahrzeuges gegen Diebstahl.

Zur Sicherung eines Kraftfahrzeuges gegen Diebstahl ist es bekannt, mittels eines Stabes ein Fußpedal mit dem Lenkrad zu verbinden, damit weder das Fußpedal noch das Lenkrad betätigt werden kann. Außerdem ist es bekannt, mittels einer Blockiervorrichtung den Handbremshebel mit dem Schalthebel oder das Lenkrad mit dem Schalthebel zu verbinden. Diese bekannten Diebstahlsicherungen sind leicht zugänglich und können dementsprechend verhältnismäßig einfach aufgebrochen werden.

Ein Verfahren und eine Vorrichtung zum Sichern eines Kraftfahrzeuges gegen Diebstahl entsprechend dem Oberbegriff der Patentansprüche 1, 5 oder 13 ist in der britischen Patentanmeldung 2243815 A beschrieben. Entsprechend dieser Druckschrift wird eine Zahnstange über ein motorgetriebenes Ritzel zwischen einer Freigabestellung und einer Verriegelungsstellung hin und her bewegt. In Verriegelungsstellung ragt die Zahnstange durch Öffnungen in einem oder mehreren Fußpedalhebeln hindurch. Diese bekannte Diebstahlsicherung ist schwer zugänglich und kann dementsprechend nicht einfach aufgebrochen werden. Dagegen ist die bekannte Diebstahlsicherung weniger geeignet zur Nachrüstung an einem bestehenden Kraftfahrzeug, da besondere Vorrichtungen getroffen werden müssen, um die Verriegelungszahnstange in ihrer Freigabestellung in dem Getrieberaum des Kraftfahrzeugbodens aufzunehmen. Einen ähnlichen Stand der Technik zeigt auch die internationale Patentanmeldung WO90/09912, wobei auf hydraulischem Wege eine Verriegelungsstange zwischen einer Freigabestellung und einer Verriegelungsstellung hin und her bewegt wird zum Blockieren des Bremspedalhebels. Entsprechend der britischen Patentschrift 153 060 wird mittels eines am Fahrzeugrahmen befestigten Schlosses ein Schaft durch eine Öffnung im Kupplungspedalhebel hindurchgeführt. Die DE-Offenlegungsschrift 3940459 beschreibt eine elektrische Einrichtung zur Diebstahlsicherung von Kraftfahrzeugen, wobei ein in der Schwenkebene des Bremspedals bewegliches Verriegelungsglied mit dem Lagerschaft des Bremspedals in Eingriff zu bringen ist. Eine weitere Vorrichtung zur Blockierung der Fußpedalhebel eines Kraftfahrzeuges ist in der europäischen Patentanmeldung 0 085 257 beschrieben. Dabei wird im Fußpedalraum des Kraftfahrzeuges ein Blockiergestell aufgebaut und mittels eines Vorhängeschlosses gesichert, damit die Fußpedale nicht mehr betätigt werden können. Entsprechend dieser Druckschrift ist es auch möglich eine Blockierstange durch Öffnungen in den Fußpedalhebel hindurchzuführen und mittels einem Vorhängeschloß zu sichern. Diese Diebstahlsicherung ist in dem nicht einfach zugänglichen Raum der Fußpedalhebel nur sehr mühevoll anzubringen.

Aufgabe der Erfindung ist es, ein Verfahren und eine Vorrichtung zum Sichern eines Kraftfahrzeuges gegen Diebstahl zu schaffen, das bzw. die die oben erwähnten Nachteile nicht aufweist. Die entsprechendend dem erfindungsgemäßen Verfahren aufgebaute Vorrichtung soll schwer zugänglich und aufbrechsicher und dennoch mühelos anzubringen und zu entfernen sein und soll sich einfach an einem bestehenden Kraftfahrzeug nachrüsten lassen.

Zur Lösung dieser Aufgabe schafft die Erfindung ein Verfahren zum Sichern gegen Diebstahl eines Kraftfahrzeuges mit Fußpedalen, wobei jedes Fußpedal einen Fußpedalhebel aufweist, der auf einer Schwenkachse gelagert und in einer senkrechten Ebene schwenkbar ist, und wobei wenigstens eines der Fußpedale gegen Schwenkbewegung mittels einer Blockierstange blockiert wird, die im wesentlichen quer zur Schwenkebene des Fußpedals in eine Blockierstellung vorgeschoben wird, in welcher die Stange den Fußpedalhebel gegen Betätigung sperrt, und die Blockierstange anschließend in der Blockierstellung verriegelt wird, dadurch gekennzeichnet, daß die Blockierstange manuell von der Fahrzeugaußenseite her in die Blockierstellung eingesteckt wird.

Die Erfindung schafft außerdem eine Diebstahlsicherung an einem Kraftfahrzeug mit Fußpedalen, wobei jedes Fußpedal einen Fußpedalhebel aufweist, der auf einer Schwenkachse gelagert und in einer Ebene schwenkbar ist, und wobei wenigstens ein Fußpedal gegen Schwenkbewegung zu blockieren ist, mit einer Lagerung für eine Blockierstange auf wenigstens einer Seite des Fußpedals, wobei die Lagerung an einem feststehenden Bauteil des Kraftfahrzeuges befestigt ist und eine Aufnahmebohrung für die Blockierstange aufweist, welche Bohrung im wesentlichen senkrecht zu Schwenkebene des Fußpedals ausgerichtet ist, und wobei die Blockierstange in einer Fußpedalsperrstellung aus der Lagerung so weit hinausragt, um das Fußpedal gegen Betätigung zu sperren, und mit einer Vorrichtung zum Verriegeln der Blockierstange in der Sperrstellung, dadurch gekennzeichnet, daß im Außenblech der Fahrzeugkarosserie eine Öffnung vorgesehen ist, die mit der Aufnahmebohrung in der Lagerung ausgerichtet ist, und daß die Blockierstange manuell von der Fahrzeugaußenseite her durch die Öffnung in die Sperrstellung einzuführen und zur Freigabe des Fußpedals wieder zu entfernen ist.

Schließlich schafft die Erfindung eine Diebstahlsicherung für ein Kraftfahrzeug mit Fußpedalen, die jeweils einen schwenkbar gelagerten Fußpedalhebel aufweisen, mittels welcher mindestens ein Fußpedal gegen Betätigung zu blockieren ist, mit einer Blockierstange, die zur Blockierung des Fußpedals gegen Betätigung desselben im wesentlichen quer zur Schwenkebene des Fußpedals in eine Blockierstellung vorzuschieben ist, mit einer Lagervorrichtung für die Blockierstange, welche Lagervorrichtung wenigstens einen Lagerblock aufweist, der auf einer Seite des zu blockierenden Fußpedals im Kraftfahrzeug einzubauen ist, wobei der Lagerblock eine Aufnahmebohrung für die Blockierstange aufweist, und mit einer Vorrichtung zum Verriegeln der Blockierstange in der Blockierstellung, dadurch gekennzeichnet, daß die Blockierstange manuell von der Fahrzeugaußenseite her durch eine Öffnung in dem Karosserieaußenblech und durch den Lagerblock in die Blockierstellung einschiebbar ist.

Die Blockierstange kann in der Sperr- oder Blockierstellung in einem Auge des Fußpedalhebels aufgenommen sein. Dies hat aber eine Schwächung des Fußpedalhebels zur Folge. Dementsprechend eignet sich dieses Ausführungsbeispiel weniger zur Nachrüstung, da eine neue Dimensionierung des Fußpedalhebels erforderlich ist. Zur Nachrüstung an einem bestehenden Kraftfahrzeug ist dementsprechend das Ausführungsbeispiel besser geeignet, wonach die Blockierstange mit ihrem Blockierende in der Nähe des Fußpedalhebels durch den Schwenkweg des Fußpedalhebels hindurchragt, d. h. den Fußpedalhebel auf seiner zur betätigten Stellung hin weisenden Seite kreuzt, ohne in einer besonderen Öffnung des Fußpedalhebels aufgenommen zu sein.

Vorzugsweise wird das Fußpedal in der Nähe der Schwenkachse durch die Blockierstange gesperrt. Dazu kann die Blockierstange zwischen die Fußpedalschwenkachse und die Lenksäule des Kraftfahrzeuges eingesteckt werden. In diesem Falle ist die Blockierstange besonders schwer zugänglich.

Es reicht aus, entweder das Kupplungspedal oder das Gaspedal zu blockieren. Es ist aber auch möglich, sowohl das Gaspedal als auch das Bremspedal oder das Kupplungspedal sowie das Bremspedal zu blockieren. In einem Kraftfahrzeug mit Schaltgetriebe können alle drei Fußpedale blockiert werden.

Damit bei Platzmangel die Blockierstange durch die Öffnung in dem Außenblech der Karosserie einzuschieben oder zurückzuziehen ist, kann die Blockierstange ein Faltgelenk aufweisen, das sich in der Sperrstellung der Blockierstange in der Aufnahmebohrung der Lagerung befindet. Es kann ein von der Fahrzeugaußenseite her zugängliches Schloß vorgesehen sein zur Verriegelung der Blockierstange in der Aufnahmebohrung der Lagerung. Die Blockierstange kann auch elektrisch verriegelt werden, so kann z. B. mittels eines Elektromotors ein Verriegelungsglied mit der Blockierstange in Eingriff gebracht werden. Der Elektromotor ist dabei vorzugsweise mit einer elektrischen Verriegelung vorgesehen.

Ein Ausführungsbeispiel der Diebstahlsicherung ist in den Figuren dargestellt und wird im folgenden ausführlicher beschrieben, es zeigen:
Figur 1 ein Ausführungsbeispiel der Diebstahlsicherung mit eingesteckter Blockierstange und
Figur 2 eine schematische Ansicht längs der Linie 2-2 nach Figur 1.

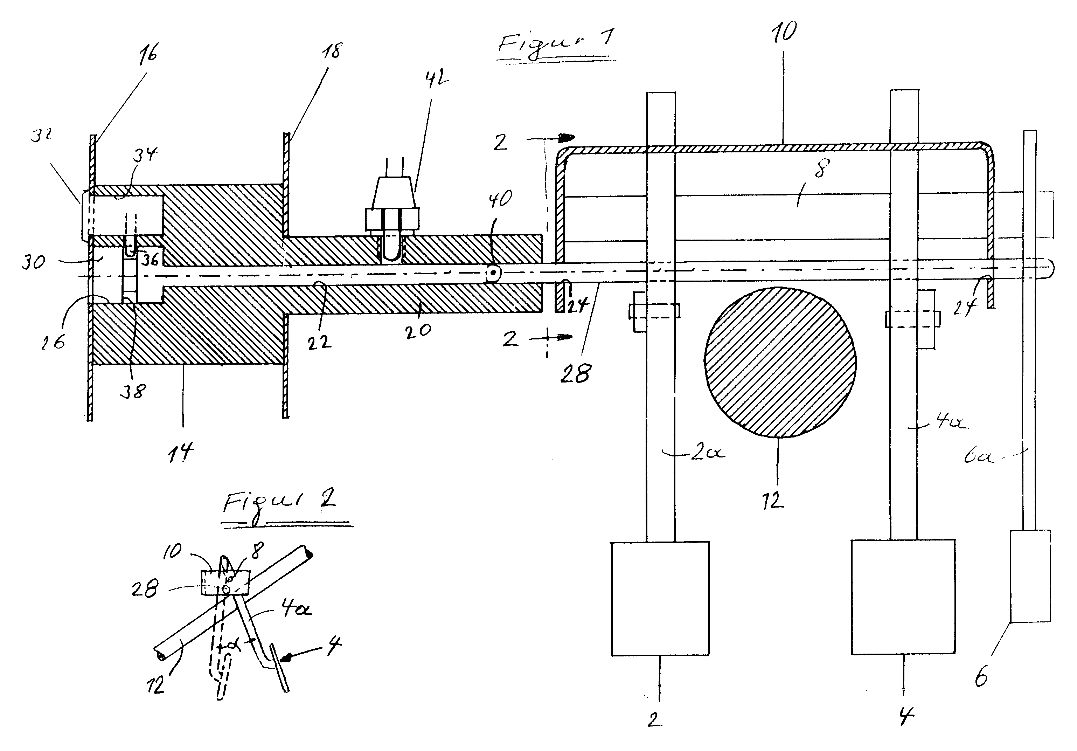

In der Figur 1 ist ein Kraftfahrzeugkupplungspedal 2, ein Kraftfahrzeugbremspedal 4 und ein Kraftfahrzeuggaspedal 6 dargestellt. Die Fußpedalhebel 2a, 4a, 6a der drei Pedale sind auf einer Schwenkachse 8 schwenkbar, die in einem U-förmig gebogenen Pedalenhalter 10 sitzt. Die Kraftfahrzeuglenksäule ist mit 12 schematisch dargestellt. Ein Lagerblock 14 ist zwischen dem Karosserieaußenblech 16 und einer inneren Trennwand 18 eingebaut und hat eine Verlängerung 20, die durch eine Öffnung in der Trennwand 18 hindurch bis in die Nähe des Pedalenhalters 10 ragt. Eine Längsbohrung im Lagerblock 14 mündet auf der Seite des Karosserieaußenbleches in eine Vertiefung 26 größeren Durchmessers. Eine Blockierstange 28 mit einem dickeren Kopfende 30 wird manuell von der Außenseite des Fahrzeugs her durch eine Öffnung in dem Karosserieaußenblech 16 und die Bohrung 22 bis in ein Lagerauge auf der dem Lagerblock 14 gegenüber liegenden Seite der zu sperrenden Fußpedale eingesteckt, damit sie in der Nähe der Schwenkachse zwischen derselben und der Lenksäule 12 durch den Schwenkwinkel der Fußpedalhebel 2a, 4a und 6a hindurchragt. Die Blockierstange 28 kann in Öffnungen 24 des Pedalhalters 10 aufgenommen werden, welche beidseitig der Pedale liegen. Das Kopfende 30 der Blockierstange 28 wird bis auf den Grund der Vertiefung 26 eingeführt und dann mittels eines Zylinderschlosses 32 von der Außenseite des Karosserieaußenbleches 16 verriegelt. Das Zylinderschloß 32 ist auch in eine Vertiefung 34 des Lagerblockes 14 eingesetzt und hat einen Stift 36, der zur Verriegelung der Blockierstange 28 in eine Umfangsnut 38 des Kopfendes 30 ausfahrbar ist. Die Verriegelung der Blockierstange 28 in der Blockierstellung kann aber auch mittels eines Schlosses oder eines Elektromotors vom Fahrersitz aus vorgenommen werden. Vorzugsweise hat die Blockierstange ein Faltgelenk 40, das bei eingesetzter Blockierstange in der Längsbohrung 22 des Lagerblockes 14 liegt. Bei eingesetzter Blockierstange können die Fußpedale des Kraftfahrzeuges nicht mehr betätigt werden. Durch die besondere Lage der Blockierstange in der Nähe der Fußpedalschwenkachse 18 zwischen der Lenksäule und der Schwenkachse ist die Blockierstange für ein unerwünschtes Entfernen außerordentlich schwierig zugänglich. Auch von der Karosserieaußenseite her läßt sich die Blockierstange nicht ohne Aufschneiden des Außenbleches entfernen. Aus der Figur 2 ist ersichtlich, daß die Blockierstange in der Nähe der Fußpedalschwenkachse durch den Schwenkweg oder Schwenkwinkel α des Pedalhebels 4a zwischen der Schwenkachse 8 und der Lenksäule 12 hindurch ragt.

Bei eingeführter und unverriegelter Blockierstange läßt sich somit das Fußpedal nicht mehr betätigen und dementsprechend kann das Kraftfahrzeug nicht mehr betrieben werden. Bei einem Kraftfahrzeug mit automatischem Getriebe ist nur die Blockierung des Bremspedals durch die Blockierstange erforderlich. Bei einem Kraftfahrzeug mit Wechselgetriebe wird gleichzeitig auch das Kupplungspedal blockiert. In beiden Fällen kann, wie in der Figur 1 dargestellt, die Blockierstange auch bis über den Fußpedalhalter hinausragen und damit außer dem Brems- und Kupplungspedal auch noch das Gaspedal blockieren. Es ist auch denkbar, die Blockierstange durch in dem Pedalhebel eingearbeitete Bohrungen (nicht dargestellt) hindurch zu führen.

Außer der Blockierung der Fußpedale kann auch noch die Zündung unterbrochen werden. Hierzu kann in dem Zündschaltkreis ein Zündungsunterbrecher 42 vorgesehen sein, der auf der Verlängerung 20 des Lagerblockes 14 sitzt und bei eingeführter Blockierstange 28 offen gesteuert ist.

## Patentansprüche

1. Verfahren zum Sichern gegen Diebstahl eines Kraftfahrzeuges mit Fußpedalen (2, 4, 6), wobei jedes Fußpedal einen Fußpedalhebel (2a, 4a, 6a) aufweist, der auf einer Schwenkachse (8) gelagert und in einer senkrechten Ebene schwenkbar ist, und wobei wenigstens eines der Fußpedale gegen Schwenkbewegung mittels einer Blockierstange (28) blockiert wird, die im wesentlichen quer zur Schwenkebene des Fußpedals in eine Blockierstellung vorgeschoben wird, in welcher die Stange den Fußpedalhebel gegen Betätigung sperrt und die Blockierstange (28) anschließend in der Blockierstellung verriegelt wird, dadurch gekennzeichnet, daß die Blockierstange (28) manuell von der Fahrzeugaußenseite her in die Blockierstellung eingesteckt wird.

2. Verfahren nach Anspruch 1, dadurch gekennzeichnet, daß das Fußpedal in der Nähe der Schwenkachse (8) durch die Blockierstange (28) gesperrt wird.

3. Verfahren nach Anspruch 1 zum Sichern gegen Diebstahl eines Kraftfahrzeuges mit einer Lenksäule (12), dadurch gekennzeichnet, daß die Blockierstange (28) zwischen die Fußpedalschwenkachse (8) und die Lenksäule (12) eingesteckt wird.

4. Verfahren nach einem der Ansprüche 1 bis 3, dadurch gekennzeichnet, daß die Blockierstange (28) zur Sperrung des Fußpedals durch den Fußpedalhebel oder in der Nähe des Fuppedalhebels durch den Schwenkweg desselben eingesteckt wird.

5. Diebstahlsicherung an einem Kraftfahrzeug mit Fußpedalen (2, 4, 6), wobei jedes Fußpedal einen Fußpedalhebel (2a, 4a, 6a) aufweist, der auf einer Schwenkachse (8) gelagert und in einer Ebene schwenkbar ist, und wobei wenigstens ein Fußpedal gegen Schwenkbewegung zu blockieren ist mit einer Lagerung (14) für eine Blockierstange (28) auf wenigstens einer Seite des Fußpedals, wobei die Lagerung an einem feststehenden Bauteil des Kraftfahrzeuges befestigt ist und eine Aufnahmebohrung (22) für die Blockierstange (28) aufweist, welche Bohrung im wesentlichen senkrecht zur Schwenkebene des Fußpedals ausgerichtet ist, und wobei die Blockierstange (28) in einer Fußpedalsperrstellung aus der Lagerung (14) so weit hinausragt, um das Fußpedal gegen Betätigung zu sperren, und mit einer Vorrichtung zum Verriegeln der Blockierstange in der Sperrstellung, dadurch gekennzeichnet, daß im Außenblech (16) der Fahrzeugkarosserie eine Öffnung vorgesehen ist, die mit der Aufnahmebohrung (22) in der Lagerung (14) ausgerichtet ist, und daß die Blockierstange (28) manuell von der Fahrzeugaußenseite her durch die Öffnung in die Sperrstellung einzuführen und zur Freigabe des Fußpedals wieder zu entfernen ist.

6. Diebstahlsicherung nach Anspruch 5, dadurch gekennzeichnet, daß die Schwenkachse (8) in einem Fußpedalhalter (10) angeordnet ist, und die Blockierstange (28) in der Sperrstellung in Aufnahmeöffnungen (24) des Fußpedalhalters eingreift (10).

7. Diebstahlsicherung nach Anspruch 6 an einem Kraftfahrzeug mit einer Lenksäule (12), dadurch gekennzeichnet, daß die Aufnahmeöffnungen (24) in dem Fußpedalhalter (10) in der Nähe der Schwenkachse (8) zwischen derselben und der Lenksäule (12) vorgesehen sind.

8. Diebstahlsicherung nach einem der Ansprüche 5 bis 7, dadurch gekennzeichnet, daß die Blockierstange (28) ein Faltgelenk (40) aufweist, das sich in der Sperrstellung der Stange (28) in die Aufnahmebohrung (22) der Lagerung (14) befindet.

9. Diebstahlsicherung nach einem der Ansprüche 5 bis 8, dadurch gekennzeichnet, daß die Blockierstange (28) in der Sperrstellung sich außen am Fußpedalhebel vorbei durch den Schwenkweg desselben erstreckt.

10. Diebstahlsicherung nach einem der Ansprüche 5 bis 9, gekennzeichnet durch ein von der Fahrzeugaußenseite her zugängliches Schloß (32) zur Verriegelung der Blockierstange (28) in der Aufnahmebohrung (22) der Lagerung (14).

11. Diebstahlsicherung nach einem der Ansprüche 5 bis 9, dadurch gekennzeichnet, daß ein Schloß zur Verriegelung der Blockierstange (28) im Fahrzeuginnenraum vorgesehen ist.

12. Diebstahlsicherung nach einem der Ansprüche 5 bis 9, dadurch gekennzeichnet, daß die Blockierstange (28) mittels eines Elektromotors zu verriegeln ist.

13. Diebstahlsicherung für ein Kraftfahrzeug mit Fußpedalen (2, 4, 6), die jeweils einen schwenkbar gelagerten Fußpedalhebel (2a, 4a, 6a) aufweisen, mittels welcher mindestens ein Fußpedal gegen Betätigung zu blockieren ist, mit einer Blockierstange (28), die zur Blockierung des Fußpedals gegen Betätigung desselben im wesentlichen quer zur Schwenkebene des Fußpedals eine Blockierstellung vorzuschieben ist, mit einer Lagervorrichtung (14) für die Blockierstange (28), welche Lagervorrichtung (14) wenigstens einen Lagerblock aufweist, der auf einer Seite des zu blockierenden Fußpedals im Kraftfahrzeug einzubauen ist, wobei der Lagerblock (14) eine Aufnahmebohrung (22) für die Blockierstange aufweist, und mit einer Vorrichtung zum Verriegeln der Blockierstange (28) in der Blockierstellung, dadurch gekennzeichnet, daß die Blockierstange (28) manuell von der Fahrzeugaußenseite her durch eine Öffnung in dem Karosserieaußenblech (16) und durch den Lagerblock (14) in die Blockierstellung einschiebbar ist.

14. Diebstahlsicherung nach Anspruch 13, dadurch gekennzeichnet, daß die Blockierstange (28) ein Faltgelenk (40) aufweist, das in der Blockierstellung der Blockierstange (28) in der Aufnahmebohrung (22) des Lagerblocks (14) liegt.

15. Diebstahlsicherung nach Anspruch 13 oder 14, dadurch gekennzeichnet, daß die Vorrichtung zum Verriegeln der Blockierstange (28) ein Zylinderschloß (32) aufweist, zum Zurückhalten der Blockierstange (28) in dem Lagerblock (14).

16. Diebstahlsicherung nach Anspruch 13 oder 14, gekennzeichnet durch einen Elektromotor zur Verriegelung der Blockierstange (28).

17. Diebstahlsicherung nach einem der Ansprüche 13 bis 16, dadurch gekennzeichnet, daß auf dem Lagerblock (14) ein durch die Blockierstange (28) zu betätigender Zündungsunterbrecher (42) sitzt.

18. Diebstahlsicherung nach einem der Ansprüche 13 bis 17, dadurch gekennzeichnet, daß die Blockierstange (28) außen am Fußpedalhebel vorbei durch den Schwenkweg des Fußpedalhebels einzustecken ist.

19. Diebstahlsicherung nach einem der Ansprüche 13 bis 17, dadurch gekennzeichnet, daß das Fußpedal eine Öffnung aufweist zur Aufnahme der Blockierstange (28) in der Sperrstellung.

20. Diebstahlsicherung nach einem der Ansprüche 13 bis 19 gekennzeichnet durch ein Lagerauge zur Aufnahme der Blockierstange (28) auf der dem Lagerblock (14) gegenüber liegenden Seite des gesperrten Fußpedals.
